# EUROPÄISCHE PATENTANMELDUNG

(11) **EP 1 857 182 A2**
(43) Veröffentlichungstag der Anmeldung: **21.11.2007**
(21) Anmeldenummer: 07009574.0
(22) Anmeldetag: 12.05.2007
(51) Int. Cl.: B02C 18/22, B02C 23/02, B26D 7/18, B29C 51/26, B29C 51/46, B65H 20/16

(54) **Verfahren zum Überführen des Anfangs einer Folienbahn oder eines Folienrestgitters von einer Thermoformmaschine zu einer Schneidmühle und Überführungseinrichtung**

(30) Priorität: 18.05.2006 DE 102006023299
(71) Anmelder: ILLIG Maschinenbau GmbH & Co. KG, 74081 Heilbronn (DE)
(72) Erfinder: Firzlaff, Michael, 74223 Flein (DE); Trautwein, Herbert, 71737 Kirchberg (DE)

(57) **Zusammenfassung**

Durch die Erfindung wird das Überführen eines Anfangs einer Folienbahn (5) oder eines Folienrestgitters (10) aus thermoplastischem Kunststoff von einer Thermoformmaschine (1) zum Tiefziehen und Ausstanzen von Behältern zu einer Schneidmühle (3) zum Zermahlen der Folienbahn oder des Folienrestgitters verbessert im Hinblick auf Unfallsicherheit und Handhabung, wenn eine Überführungseinrichtung weit oberhalb eines Einlaufs der Schneidmühle angeordnet werden muss, um sie über eine Stapeleinrichtung hinwegführen zu können.

Erreicht wird dies dadurch, dass ein mit einer Klemmeinrichtung versehener Transportwagen (14), der den Anfang der Folienbahn (5) oder des Folienrestgitters (10) zu einer ortsfesten Klemmeinrichtung transportiert, anschließend mit geöffneter Klemmeinrichtung entgegen der Vorschubrichtung (40) fährt, die Folienbahn erneut klemmt und sie nochmals oder mehrmals in Richtung der ortsfesten Klemmeinrichtung transportiert. Auf diese Weise wird ein entsprechend langes Stück der Folienbahn oder des Folienrestgitters vor dem Einlauf der Schneidmühle bereitgestellt, das von der Bedienungsperson ergriffen und der Schneidmühle zugeführt werden kann. Der Transportwagen wird dabei von einer offenen, ringsum geführten Rollenkette oder einer Schubkette bewegt.

## Beschreibung

Die Erfindung betrifft ein Verfahren zum Überführen des Anfangs einer Folienbahn oder eines Folienrestgitters von einer Thermoformmaschine zu einer Schneidmühle und eine Überführungseinrichtung.

Aus der DE 103 13 370 B3 ist ein Verfahren bekannt, bei dem mittels einer Überführungseinrichtung mit einem Transportwagen der Anfang einer Folienbahn oder eines Folienrestgitters von einer Thermoformmaschine zu einer Schneidmühle geführt wird. Der Transportwagen ergreift die Folienbahn oder das Folienrestgitter kurz nach dessen Anfang und führt diese vorzugsweise synchron zur Transporteinrichtung der vorgeschalteten Thermoformmaschine bis zu einem Paar von Transportwalzen. Wenn diese den Anfang ergriffen haben, ist die Funktion des Transportwagens beendet, die Transportwalzen führen den Anfang der Folienbahn oder des Folienrestgitters in die Schneidmühle. Zwischen der Thermoformmaschine und der Schneidmühle ist eine Stapeleinrichtung angeordnet, über die die Folienbahn oder das Folienrestgitter hinweg geführt werden muss. Diese Stapeleinrichtung weist in der Regel eine relativ große vertikale Erstreckung auf, sodass der Anfang der Folienbahn oder des Folienrestgitters auf einer Höhe in der Größenordnung von etwa 3 m die Transportwalzen verlässt und nach unten in die wesentlich tiefer stehende Schneidmühle geführt werden muss. Da sich die Folienbahn oder das Folienrestgitter nicht schieben lässt und zudem mehr oder weniger verformt und damit wellig ist, ist eine automatische Übergabe nur mit hohem technischem Aufwand realisierbar und immer störungsanfällig. Ein manuelles Einführen in die Schneidmühle ist insgesamt vorzuziehen, da es einfacher und störungsunanfälliger ist. Dabei muss jedoch verhindert sein, dass eine Unfallgefahr für die Bedienungsperson durch sich bewegende Bauteile besteht und das Einführen darf den störungsfreien Betrieb der vorgeschalteten Transporteinrichtung der Thermoformmaschine nicht negativ beeinflussen.

Aus der DE 196 42 459 A1 ist eine Schneidmühle bekannt, der ein Folienrestgitter von einer Thermoformmaschine zugeführt wird. Eine Schwinge dient zur Anpassung des intermittierenden Folienvorschubs der Thermoformmaschine an den kontinuierlichen Folieneinzug der Schneidmühle. Auf die Überführung des Anfangs einer Folienbahn oder eines Folienrestgitters beim Rollenwechsel oder beim Anfahren der Maschinenlinie ist in dieser Schrift nicht näher eingegangen. Durch Maschinenlieferungen des Anmelders ist es bekannt, oberhalb der Stapeleinrichtung, die am Auslauf der Thermoformmaschine angeordnet ist, ein horizontal umlaufendes Förderband anzuordnen. Auf dieses wirken Andrückrollen, sodass eine Mitnahme der dazwischen liegenden Folienbahn oder des Folienrestgitters erfolgt. Diese Andrückrollen sind schwenkbar gestaltet, um die Folienbahn oder das Folienrestgitter einführen zu können. Das Problem liegt darin, dass das Förderband, da es oberhalb der Stapeleinrichtung verläuft, eine Höhe aufweist, die von einer Bedienungsperson nicht ohne weiteres mit der Hand erreicht werden kann. Das Einführen des Anfanges einer Folienbahn ist dadurch umständlich, störungsanfällig und erfordert Zeit, weil die Bedienungsperson nicht nur die Folienbahn auf das Förderband überführen, sondern im weiteren Verlauf diese auch am Ende des Transportbandes ergreifen muss. Fahrbare Podeste sind eine Lösung, die Platz erfordern und bei Nichtverwendung im Weg stehen. Die Bedienungsperson arbeitet an gefährlichen Einzugsstellen und ist dabei einer Verletzungsgefahr ausgesetzt.

Der Erfindung liegt die Aufgabe zugrunde, die Nachteile des geschilderten Standes der Technik zu vermeiden, indem einerseits ein automatisches Überführen der Folienbahn oder des Folienrestgitters von der Thermoformmaschine aus über die Stapeleinrichtung hinweg gegeben ist, andererseits das manuelle Überführen des Anfanges der Folienbahn oder des Folienrestgitters in die Schneidmühle vom Ende der Überführungseinrichtung aus ermöglicht wird ohne Unfallgefahr und ohne Verwendung von Aufstiegshilfen. Die Transporteinrichtung der vorgeschalteten Thermoformmaschine sollte ohne Staugefahr betrieben werden können. Dabei sollte ein einfacher Aufbau der dazu erforderlichen Überführungseinrichtung möglich sein.
Gelöst ist diese Aufgabe durch die im Hauptanspruch angegebenen Maßnahmen sowie durch eine Überführungseinrichtung nach Anspruch 5. Weitere bevorzugte Ausgestaltungen der Erfindung ergeben sich aus den übrigen, in den Unteransprüchen genannten Merkmalen.
Indem der Transportwagen, der die Folienbahn oder das Folienrestgitter über die Stapeleinrichtung hinwegführt, mindestens noch einen zweiten Transportschritt durchführt, wird ein so großer Abschnitt der Folienbahn oder des Folienrestgitters transportiert, dass der Anfang so weit nach unten hängt, dass er von der Bedienungsperson ergriffen und der Schneidmühle zugeführt werden kann. Der einfache Aufbau der dazu erforderlichen Überführungseinrichtung wird dadurch erreicht, dass der Transportwagen mittels einer offenen Schubkette oder einer offenen Rollenkette, die in Führungen allseitig geführt ist, bewegt wird. Der Transportwagen kann deshalb erforderliche Umlenkungen einfach durchführen.

Das Verfahren und die Überführungseinrichtung sind anhand der schematischen Zeichnungen näher beschrieben. Es zeigen:
- Figur 1: eine Seitenansicht der Überführungseinrichtung
- Figur 2: einen Querschnitt durch die Überführungseinrichtung entlang der Linie A-A in Figur 1.
- Figur 3: einen Querschnitt durch die Überführungseinrichtung entlang der Linie B - B in Figur 1.
- Figur 4: einen Querschnitt durch die Überführungseinrichtung entlang der Linie A - A in Figur 1 gemäß einer besonderen Ausführung.
- Figur 5-7: verschiedene Anordnungen einer Klemmeinrichtung

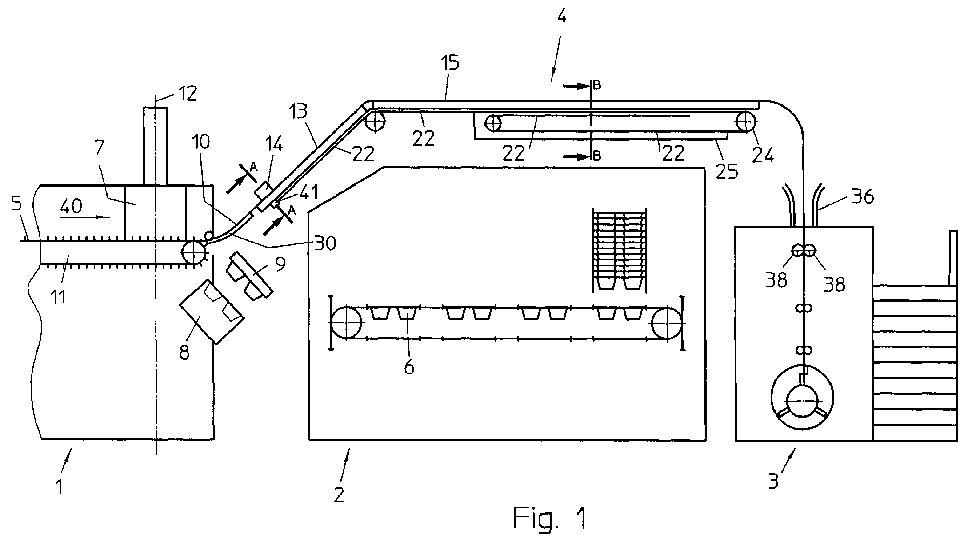

In Figur 1 ist ein Teil einer Maschinenlinie dargestellt, bestehend aus einer Thermoformmaschine 1, einer Stapeleinrichtung 2, einer Schneidmühle 3 und der Überführungseinrichtung 4, auf die sich die Erfindung ebenfalls bezieht. Aus einer erwärmten Folienbahn 5, intermittierend bewegt von der Transporteinrichtung 11, werden in der kombinierten Form-/Stanzstation 12 Behälter 6 mittels der beiden Werkzeughälften 7, 8 tiefgezogen und ausgestanzt. Die eine Werkzeughälfte 8 ist kippbar gestaltet und die ausgeworfenen Behälter 6 werden von einer Übergabeeinrichtung 9 aufgenommen und an die Stapeleinrichtung 2 übergeben. Diese führt die Behälter 6 je nach den Erfordernissen weiter zu Nachbearbeitungsmaschinen, z. B. zum Bördeln, Bedrucken, Sterilisieren, Verpacken. Das verbleibende Folienrestgitter 10 wird in der Schneidmühle 3 zermahlen.

Beim Einführen einer Folienbahn 5, also beim Rollenwechsel oder beim Anfahren der Maschinenlinie, führt die Transporteinrichtung 11 die Folienbahn 5 bis zum Auslauf der Thermoformmaschine 1 und die Überführungseinrichtung 4 transportiert diesen Anfang der Folienbahn 5 bis in die Nähe der Schneidmühle 3. Startet die Thermoformmaschine bereits, wenn der Anfang der Folienbahn 5 in die Form-/Stanzstation 12 gelangt ist, liegt sofort Folienrestgitter 10 vor.

Die Überführungseinrichtung 4 (siehe Fig. 1) weist schräg nach oben verlaufende Führungen 13 für einen Transportwagen 14 auf, die sich vom Auslaufbereich der Thermoformmaschine 1 bis oberhalb der Stapelmaschine 2 erstrecken. Dort gehen sie in einer ersten Krümmung über in horizontal verlaufende Führungen 15, in denen die am Transportwagen 14 angeordneten Rollen 21 weiterhin geführt sind. Der Transportwagen 14 besteht aus einer Auflageplatte 16, einem auf Abstand dazu angeordneten Quersteg 17, der Klemmeinrichtungen 18 trägt, bestehend aus Antrieb 19 und Klemmplatte 20 und aus Rollen 21, die in den Führungen 13, 15 laufen. Andere Führungseinrichtungen für den Transportwagen 14, z. B. seine Befestigung an einer umlaufenden Rollenkette, sind möglich.

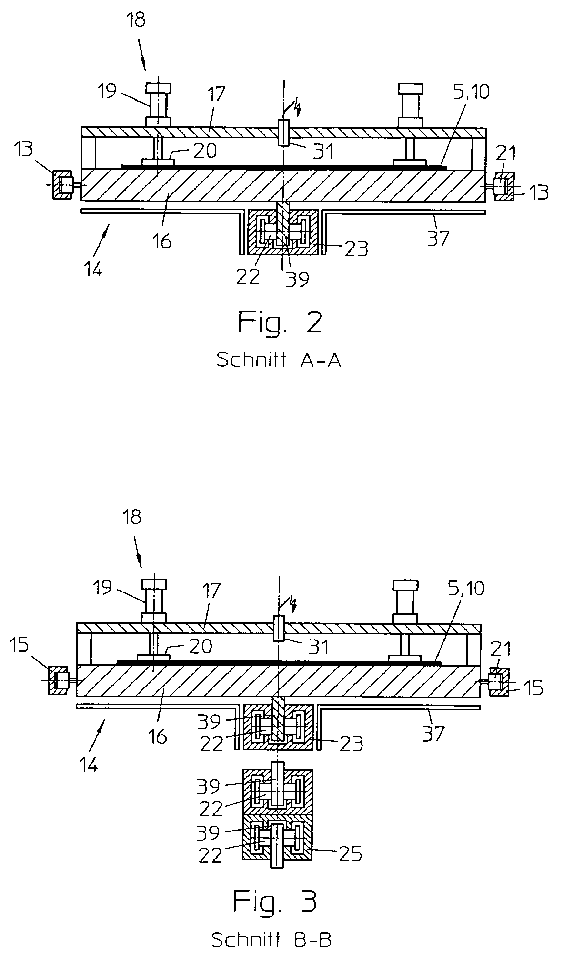

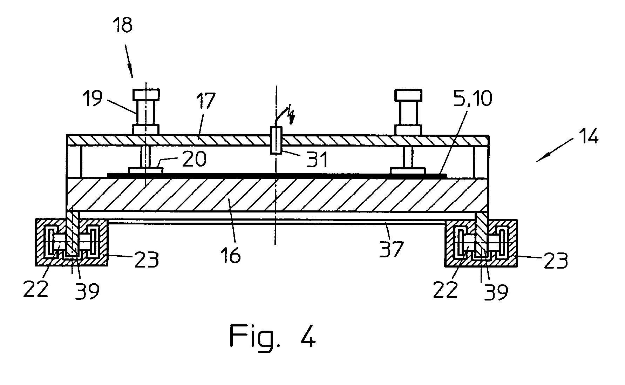

Angetrieben wird der Transportwagen 14 über mindestens eine an ihm mittels einer Lasche 39 befestigten Transportkette 22, die in Führungen 23 geführt ist. Sie verläuft über ein Umlenkkettenrad 24, das mittels eines Antriebes 32 verdrehbar ist, wobei die Transportkette 22 zurückgeführt wird in Führungen 25 und je nach Länge der Überführungseinrichtung 4 nochmals umgelenkt und weitergeführt wird in diesen Führungen 25 wie aus Figur 1 und 2 ersichtlich. Im Bereich des Umlenkkettenrades 24 ist eine ortsfeste Klemmeinrichtung 26 angeordnet, wie es in verschiedenen Ausführungen in den Figuren 4, 5 und 6 vergrößert dargestellt ist. Seitlich von den Führungen 23 sind vorzugsweise Auflagebleche 37 angeordnet, die zur Auflage der Folienbahn 5 oder des Folienrestgitters 10 dienen. Statt einer mittigen Transportkette 22 können selbstverständlich auch zwei oder mehr Transportketten 22 nebeneinander vorgesehen sein.

Gemäß Figur 4 ist der Transportwagen 14 in einer besonderen Ausführung der Überführungseinrichtung anstelle von Rollen 21 mit mehreren Laschen 39 versehen, die an der Transportkette 22 angeordnet sind. Er wird in Führungen 23 der Transportkette 22 geführt.

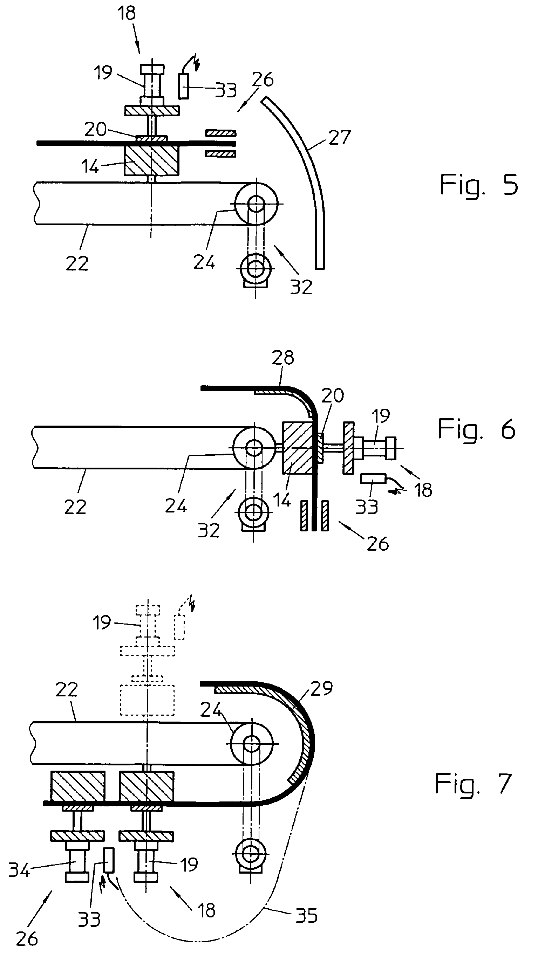

Gemäß Figur 5 sitzt die Klemmeinrichtung 26 oberhalb des Umlenkkettenrades 24. In diesem Fall ist ein Gleitblech 27 so angeordnet, dass es den Anfang der Folienbahn 5 oder des Folienrestgitters 10 nach unten umlenkt, wenn dieser Anfang horizontal gegen das Gleitblech 27 geschoben wird.

Gemäß Figur 6 ist die Klemmeinrichtung 26 seitlich des Umlenkkettenrades 24 angeordnet. Ein Gleitblech 28 dient der Auflage und Führung der Folienbahn 5 oder des Folienrestgitters 10.

Gemäß Figur 7 ist die Klemmeinrichtung 26 unterhalb des Umlenkkettenrades 24 angeordnet. Ein Gleitblech 29 dient der Auflage und Führung der Folienbahn 5 oder des Folienrestgitters 10.

Gemäß einer besonderen Ausführung der Überführungseinrichtung ist die Transportkette 22 als Schubkette oder als Zug- und Schubkette ausgebildet, die nur in einer Richtung gebogen werden kann, in der anderer Richtung steif ist. Diese Ausführung lässt ein Schieben der Transportkette 22 besonders sicher zu. Prinzipiell ist aber auch der Einsatz einer standardmäßigen Rollenkette möglich, die dann ringsum geführt sein muss, um eine Schubkraft ausüben zu können.
Verfahrenstechnisch findet folgender Ablauf beim Einführen einer neuen Folienbahn 5 in die Thermoformmaschine 1 statt: Die Transporteinrichtung 11 der Thermoformmaschine 1 führt die Folienbahn 5 oder das Folienrestgitter 10 intermittierend in Vorschubrichtung 40 bis zu ihrem Auslauf und in Richtung des am unteren Ende der Führungen 13 stehenden Transportwagens 14, wozu ein Leitblech 30 unterstützend und hilfreich ist. Ein am Transportwagen 14 befindlicher Sensor 31 erkennt den Anfang der Folienbahn 5 oder des Folienrestgitters 10. Es folgt das Festklemmen des Anfangs durch Betätigen der Antriebe 19. Der Antrieb der Transporteinrichtung 11 und der Antrieb 32 des Transportwagens 14 werden jetzt entweder synchron betrieben, so dass der Transportwagen 14 immer denselben Weg wie die Folienbahn 5 zurücklegt und diese straff hält. Oder durch Einsatz eines Pneumatikmotors als Antrieb 32 wird eine vorgegebene Vorspannung in Folienbahn 5 oder im Folienrestgitter 10 erzeugt und dadurch wird die synchrone Vorschubbewegung erzeugt.

Hat der Transportwagen 14 und damit der Anfang der Folienbahn 5 oder des Folienrestgitters 10 die Klemmeinrichtung 26 erreicht - wozu der Transportwagen 14 je nach Anordnung der Klemmeinrichtung 26 mindestens einmal entsprechend umgelenkt wird und wobei diese Stellung vorzugsweise von einem ortsfesten Sensor 33 erfasst wird - wird der Antrieb 32 gestoppt. Die Klemmeinrichtung 26 klemmt den Anfang der Folienbahn 5 oder des Folienrestgitters 10, indem an ihr angeordnete Antriebe 34 betätigt werden. Jetzt öffnen die Antriebe 19 der Klemmeinrichtung 18 und geben die Folienbahn 5 oder das Folienrestgitter 10 frei, sodass der Transportwagen 14 entgegen der Vorschubrichtung 40 zurückfahren kann. Nach einem vorgegebenen und einstellbaren Verfahrweg schließen die Antriebe 19 wieder und der Transportwagen 14 fährt wieder bis zur Klemmeinrichtung 26. Dabei schiebt er den vor ihm befindliche Abschnitt der Folienbahn 5 oder des Folienrestgitters 10 vor sich her, der dann entweder nach unten bei geöffneter Klemmeinrichtung 26 umgelenkt wird (Figur 4 und Figur 5) oder der dabei eine Schlaufe 35 bildet, wie in Figur 6 dargestellt, wenn die Klemmeinrichtung 26 geschlossen gehalten wird. Im letzteren Fall wird der Transportwagen - wie in Figur 6 strichpunktiert dargestellt - nach dem letzten Vorschubschritt vor dem Umlenkkettenrad 24 geparkt und dann wird die Klemmeinrichtung 26 geöffnet.

Dieser Verfahrensschritt des Nachschiebens der Folienbahn 5 oder des Folienrestgitters 10 lässt sich mehrfach wiederholen, bis genügend Vorrat an Folienbahn 5 oder Folienrestgitter 10 vorgeschoben ist um den Anfang der Folienbahn 5 oder des Folienrestgitters 10 bis zum Einlauf 36 der Schneidmühle 3 manuell zu führen und dort einzuschieben. In der Schneidmühle 3 übernehmen Transportwalzen 38 den Weitertransport der Folienbahn 5 oder des Folienrestgitters 10.

### Bezugszeichenliste

| | | | |
|---|---|---|---|
| 1 | Thermoformmaschine | 34 | Antrieb |
| 2 | Stapeleinrichtung | 35 | Schlaufe |
| 3 | Schneidmühle | 36 | Einlauf |
| 4 | Überführungseinrichtung | 37 | Auflageblech |
| 5 | Folienbahn | 38 | Transportwalzen |
| 6 | Behälter | 39 | Lasche |
| 7 | Werkzeughälfte | 40 | Vorschubrichtung |
| 8 | Werkzeughälfte | | |
| 9 | Übergabeeinrichtung | | |
| 10 | Folienrestgitter | | |
| 11 | Transporteinrichtung | | |
| 12 | Form-/Stanzstation | | |
| 13 | Führungen | | |
| 14 | Transportwagen | | |
| 15 | Führungen | | |
| 16 | Auflageplatte | | |
| 17 | Quersteg | | |
| 18 | Klemmeinrichtung | | |
| 19 | Antrieb | | |
| 20 | Klemmplatte | | |
| 21 | Rollen | | |
| 22 | Transportkette | | |
| 23 | Führung | | |
| 24 | Umlenkkettenrad | | |
| 25 | Führung | | |
| 26 | Klemmeinrichtung | | |
| 27 | Gleitblech | | |
| 28 | Gleitblech | | |
| 29 | Gleitblech | | |
| 30 | Leitblech | | |
| 31 | Sensor | | |
| 32 | Antrieb | | |
| 33 | Sensor | | |

## Patentansprüche

1. Verfahren zum Überführen des Anfangs einer Folienbahn (5) oder eines Folienrestgitters (10) aus thermoplastischem Kunststoff von einer Thermoformmaschine (1) zum Tiefziehen und Ausstanzen von Behältern (6) über eine der Thermoformmaschine nachgeschaltete Einrichtung hinweg zu einer Schneidmühle (3) zum Zermahlen der Folienbahn (5) oder des Folienrestgitters (10), mit einem angetriebenen Transportwagen (14), der den Anfang der Folienbahn (5) oder des Folienrestgitters (10) mittels einer Klemmeinrichtung (18) einklemmt und bis zu einer ortsfesten Klemmeinrichtung (26) führt, **dadurch gekennzeichnet, dass** nach dem Festklemmen des Anfangs der Folienbahn (5) oder des Folienrestgitters (10) durch die ortsfeste Klemmeinrichtung (26) der Transportwagen (14) bei geöffneter Klemmeinrichtung (18) entgegen der Vorschubrichtung (40) zurückbewegt, die Klemmeinrichtung (18) geschlossen und ein weiterer oder weitere Vorschubschritt/e der Folienbahn (5) oder des Folienrestgitters (10) durchgeführt wird/werden.

2. Verfahren nach Anspruch 1, **dadurch gekennzeichnet, dass** während dieser weiteren Vorschubschritte die Klemmeinrichtung (26) geöffnet ist.

3. Verfahren nach Anspruch 1, **dadurch gekennzeichnet, dass** während dieser weiteren Vorschubschritte die Klemmeinrichtung (26) geschlossen ist und nach dem letzten Vorschubschritt geöffnet wird.

4. Verfahren nach einem der Ansprüche 1 bis 3, **dadurch gekennzeichnet, dass** der Transportwagen (14) beim ersten Vorschubschritt bis unterhalb des Umlenkkettenrades (24) für die Transportkette (22) geführt wird und nach dem letzten Vorschubschritt vor dem Umlenkkettenrad (24) geparkt wird.

5. Überführungseinrichtung für den Anfang einer Folienbahn (5) oder eines Folienrestgitters (10) aus thermoplastischem Kunststoff von einer Thermoformmaschine (1) zum Tiefziehen und Ausstanzen von Behältern (6) über eine der Thermoformmaschine nachgeschaltete Einrichtung hinweg zu einer Schneidmühle (3) zum Zermahlen der Folienbahn (5) oder des Folienrestgitters (10), mit einem Transportwagen (14), der an Führungen (13, 15) verschiebbar ausgebildet ist und der eine Klemmeinrichtung (18) zum Festhalten des Anfanges der Folienbahn (5) oder des Folienrestgitters (10) aufweist, **dadurch gekennzeichnet, dass** der Transportwagen (14) mittels einer offenen, eine Zug - und eine Schubkraft aufnehmenden Transportkette (22) bewegt wird, die ausgangsseitig über ein Umlenkkettenrad (24) und entgegen der Vorschubrichtung (40) in Führungen (25) geführt ist, wobei eine Klemmeinrichtung (26) im Bereich des Umlenkkettenrades (24) angeordnet ist.

6. Überführungseinrichtung nach Anspruch 5, **dadurch gekennzeichnet, dass** die Transportkette (22) nochmals umgelenkt und wieder in Transportrichtung geführt wird.

7. Überführungseinrichtung nach Anspruch 5 oder 6, **dadurch gekennzeichnet, dass** die Klemmeinrichtung (26) seitlich oder unterhalb des Umlenkkettenrades (24) angeordnet ist.

8. Überführungseinrichtung nach Anspruch 7, **dadurch gekennzeichnet, dass** Gleitbleche (28, 29) zur Auflage der Folienbahn (5) oder des Folienrestgitters (10) im Bereich des Umlenkrades (24) angeordnet sind.

9. Überführungseinrichtung nach einem der Ansprüche 5 bis 8, **dadurch gekennzeichnet, dass** seitlich der Transportkette (22) Auflagebleche (37) angeordnet sind.
